Europäisches Patentamt

European Patent Office

Office européen des brevets

(11) Veröffentlichungsnummer: **0 231 798 B1**

# (12) EUROPÄISCHE PATENTSCHRIFT

(45) Veröffentlichungstag der Patentschrift: **03.04.91**

(51) Int. Cl.⁵: **C12H 1/16**

(21) Anmeldenummer: **87100592.2**

(22) Anmeldetag: **17.01.87**

(54) Verfahren und Vorrichtung zum Konservieren von Wein.

(30) Priorität: **20.01.86 CH 199/86**

(43) Veröffentlichungstag der Anmeldung:
**12.08.87 Patentblatt 87/33**

(45) Bekanntmachung des Hinweises auf die
Patenterteilung:
**03.04.91 Patentblatt 91/14**

(84) Benannte Vertragsstaaten:
**AT DE FR IT**

(56) Entgegenhaltungen:
**EP-A- 0 037 670**
**EP-A- 0 052 171**
**EP-A- 0 091 293**

(73) Patentinhaber: **Strohmeier, Walter**
**Lessingstrasse 2**
**CH-9008 St. Gallen(CH)**

(72) Erfinder: **Strohmeier, Walter**
**Lessingstrasse 2**
**CH-9008 St. Gallen(CH)**

(74) Vertreter: **Blum, Rudolf Emil Ernst**
**c/o E. Blum & Co Patentanwälte Vorderberg**
**11**
**CH-8044 Zürich(CH)**

## Beschreibung

Die vorliegende Erfindung betrifft ein Verfahren zum Konservieren von in einer entkorkten Flasche zu lagerndem Wein sowie eine Vorrichtung zum Ausführen des Verfahrens.

Solch ein Verfahren findet dann Anwendung, wenn eine Flasche Wein guter Qualität angebrochen worden ist und nicht sofort ausgetrunken werden soll. Ueblicherweise wird dann die Flasche mit einem Verschlusskopf wieder definitiv verschlossen und die Flasche mit Stickstoff aufgefüllt. Damit weiterhin Wein, vorzugsweise portionenweise der wieder verschlossenen Flasche entnommen werden kann, ist wie in der europäischen Veröffentlichung Nr. 052 171 dargestellt, ein durch den Verschlusskopf führendes Metallröhrchen vorgesehen, dessen eines Ende in der Flasche bis zum Boden hinabreicht und dessen anderes Ende, mit einem Hahnen verschliessbar, als Zapfstelle für den Wein dient.

Die Flasche ist dabei also in einer festen Vorrichtung eingespannt zu halten, bis sie geleert ist.

Obschon in einer angebrochenen Flasche befindlicher Wein durchaus mit zufriedenstellendem Ergebnis gelagert werden kann, sind mit dieser konventionellen Methode verschiedene Nachteile verbunden.

Zum einen ist die Flasche fest mit der Konservierungsvorrichtung verbunden; sollte das Bedürfnis bestehen,mehrere Weine zu degustieren, z.B. in einer Degustationsreihe, kann die Flasche nicht gezeigt werden. Die Besichtigung muss an der Vorrichtung erfolgen.

Ferner wird im Hahnen immer ein gewisser Rest zurückbleiben. Dieser Rest verdirbt innerhalb kurzer Zeit. Auch der im Röhrchen befindliche Wein kann sich während der Lagerdauer etwas verändern. Dies ist umso unangenehmer, je mehr dem eigentlichen Zweck des Konservierungsverfahrens gefolgt wird und kleine Portionen zu Degustationszwecken ausgeschenkt werden sollen.

Natürlich könnten das Röhrchen und der Hahnen ausgespült werden; bei gewissen Anlässen wird dies jedoch Zweifel gegenüber der Konservierung auslösen und überdies störend wirken.

Weiter ist es bei stark säurehaltigen Weinen nicht angebracht, die Lagerdauer zu lange auszudehnen, da sich das eine Ende des Metallröhrchens permanent im Wein befinden muss und so einwandfreie Qualität des Weins nicht immer garantiert werden kann.

Ferner sind zum selben Zweck Vorrichtungen bekannt geworden, bei welchen der Flaschenverschluss als Ventil zum Anschluss an eine Inert-Gasquelle ausgebildet ist. Dieser Verschluss verbleibt bis zum erneuten Weinausschank auf der Flasche und verhindert so das Eindringen von Sauerstoff (vgl. US-PS 4 475 576). Dabei kann zwar die Flasche frei gelagert werden, jedoch muss vor jedem Ausschank der Verschluss entfernt und danach zum Anwenden von Inert-Gas wieder angebracht werden.

Bei der zuletzt erwähnten Vorrichtung kann die angebrochene Flasche zwar kühl gelagert werden, indem man sie auf herkömmliche Weise in einer Art Kühlschrank verschlossen aufbewahrt. Dies ist insbesondere für Degustationszwecke nicht erwünscht, da jede Flasche zunächst dem Kühlschrank entnommen werden muss, bevor sie präsentiert werden kann.

Es stellt sich auf diesem Hintergrund die Aufgabe, ein Verfahren und eine Vorrichtung zum Konservieren von Wein in angebrochenen Flaschen zu schaffen, welches neben den optimalen Lagerbedingungen auch eine gute Präsentation und einen einfachen Ausschank für Degustationszwecke ermöglicht.

Diese Aufgabe wird dadurch gelöst, dass bei oder nach Verschliessen der Flasche durch einen in Lagerstellung an den Flaschenhals anlegbaren Verschlusskopf eine Sonde in die Flasche eingebracht und durch diese ein konservierendes Gas oder Gasgemisch in die Flasche eingeblasen wird, wobei die Flasche bei aufgesetztem Verschlusskopf während mindestens eines Zeitabschnitts der Lagerdauer gekühlt wird und wobei sich der Verschlusskopf bei der Entnahme der Flasche aus der Lagerstellung davon löst.

Die erfindungsgemässe Vorrichtung zur Durchführung des Verfahrens weist eine von aussen frei zugängliche Flaschenhalterung und eine Einrichtung zum dosierten Ausgeben von konservierendem Gas auf, wobei die Flaschenhalterung einen Verschlusskopf mit Mitteln zum Einblasen eines Gases oder Gasgemisches sowie eine Abstellfläche für den Flaschenboden derart aufweist, dass die Oeffnung der Flasche während der Lagerdauer dichtend am Verschlusskopf anliegt, wobei im Bereich der Flaschenhalterung eine Kühlvorrichtung angeordnet ist.

Bei einem bevorzugten Ausführungsbeispiel wird die Sonde bis an die Weinoberfläche herangeführt. Dadurch wird zuverlässig erreicht, dass kein Sauerstoffrest im Flaschenhals verbleiben kann.

Natürlich ist es im Rahmen der Erfindung auch denkbar, eine kurze, leicht elastische Sonde aus z.B. Hart-Kunststoff im Verschlusskopf vorzusehen. Der Flaschenhals wird über die vorzugsweise leicht nach aussen gebogene Sonde eingefahren und die Flasche in der Halterung eingespannt. Die Sonde muss dann derart kurz bemessen sein, dass sie auch bei praktisch voller Flasche nicht in den Wein eintauchen kann. Jedoch speziell bei grösseren Flaschen ist es von Vorteil, wenn die Sonde bei jedem Flüssigkeitsstand bis an die Weinoberfläche herangeführt werden kann. Solch eine Sonde besitzt dann vorteilhafterweise radial angeordnete Auslassöffnungen derart, dass das Gas oder Gasgemisch, über die Weinüberfläche streichend, die Atmosphärenluft nach oben verdrängt.

Weiter ist es von Vorteil, dass die Sonde unmittelbar nach Einblasen des Gases oder Gasgemisches für nach der Lagerdauer zu erfolgendes leichtes Lösen des Verschlusskopfes aus der Flasche in letzteren zurückgezogen wird. Damit kann die Flasche jederzeit ohne Verzögerung der konservierenden Vorrichtung für weiteres Ausschenken entnommen werden. Vorteilhafterweise wird die Sonde mit Hilfe von die Weinoberfläche detektierenden Sensoren gesteuert. Solche Sensoren können aus einem Paar feiner Silber- oder Golddrähte bestehen; werden diese unter Spannung gehalten, kann ihr Eintauchen in den Wein durch eine elektrische Schaltung konventioneller Art ausgewertet und entsprechend das Absenken der Sonde gestoppt werden.

Bei gewissen Weinen, z.B. Champagner, muss verhindert werden, dass sich das im Wein gelöste Kohlensäuregas verflüchtigt. Bei einem weiteren Ausführungsbeispiel wird deshalb soviel Gasgemisch in die Flasche eingeblasen, dass in letzterer ein Ueberdruck entsteht. Das Gasgemisch enthält dabei vorteilhafterweise Kohlensäure.

Bei einer perfekten Lagerung wird dabei der Ueberdruck auf dem Niveau des Dampfdrucks eines in dem Wein gelösten Gases gehalten, wobei die Flasche zusätzlich gekühlt wird.

Bei einem bevorzugten Ausführungsbeispiel sind weiter der Verschlusskopf und/oder die Abstellfläche für den Flaschenboden für lösbare Einspannung der Flasche federnd gelagert. Dadurch kann die Flasche mit einer Bewegung der Vorrichtung entnommen, präsentiert und wieder zurückgestellt werden.

Die Mittel zum Einblasen des Gases oder Gasgemisches besitzen eine durch den Verschlusskopf in die Flasche einführbare Sonde, welche nach Einblasen des konservierenden Gases wieder in den Verschlusskopf einziehbar ist. Damit ist eine jederzeitige Entnahme der Flasche aus der Vorrichtung gewährleistet.

Die Kühlvorrichtung ist vorzugsweise als Kühlluftkreislauf ausgebildet, in welchem die Flaschenhalterung angeordnet ist.

Nachstehend wird ein bevorzugtes Ausführungsbeispiel der Konservierungsvorrichtung anhand der Figur noch etwas näher erläutert.

Es zeigt

Fig. 1 rein schematisch einen Querschnitt durch die erfindungsgemässe Vorrichtung, und

Fig. 2 einen Verschlusskopf mit fest montierter Sonde.

Die Vorrichtung besitzt ein Gehäuse 1 mit einer Flaschenhalterung 2,3, einer Gasflasche 4 sowie einen Kühlluftkreislauf 5. Im Kühlluftkreislauf angeordnet sind ein Umwälzgebläse 6 sowie ein Kühlaggregat 7.

In der Figur ist festgehalten, wie ein Gas oder Gasgemisch durch eine Sonde 9 in eine zwischen Verschlusskopf 2 und Abstellfläche 3 eingespannte, teilweise geleerte Flasche 8 eingeblasen wird.

Dabei ist die Sonde 9 von einer im Verschlusskopf 2 angeordneten Antriebsvorrichtung soweit abgesenkt worden, bis durch Kontakt der Sensordrähte 10, 10' der weitere Vorschub der Sonde abgeregelt worden ist. Die dazu notwendige Steuerschaltung sowie die Antriebsvorrichtung sind konventioneller Art und vorzugsweise im Verschlusskopf untergebracht.

Das Absenken der Sonde 9 kann bei einem vereinfachten Ausführungsbeispiel auch manuell erfolgen.

Nach Einblasen des Gases, bei Champagner zum Beispiel vorzugsweise Kohlensäure bis zu einem gewissen Ueberdruck, wird die Sonde durch die Antriebsvorrichtung wieder in den Verschlusskopf zurückgezogen.

Wie in der Zeichnung angedeutet, ist die Auflagefläche 3 für die Flasche auf einem Federbein 11 gelagert. Durch den Druck des Federbeins liegt einerseits der Flaschenhals dichtend am Verschlusskopf 2 an; andererseits kann die Flasche leicht aus ihrer Einspannung gelöst werden, sobald der Teller 3 etwas nach unten gedrückt wird.

Durch ein Ablassrohr 12 kann aus der Flasche ausgespülter Sauerstoff entweichen.

Das Gas, welches in die Flasche eingeblasen wird, stammt aus einer Gasflasche 4, welche über eine Leitung 14 mit dem Verschlusskopf 2 verbunden ist.

Um den zu lagernden Wein auf der gewünschten Temperatur zu halten, ist ein Kühlluftkreislauf vorgesehen. Dabei wird ein Kühlluftstrom durch ein Gebläse 6 aufrechterhalten; ein Kühlaggregat 7 sorgt für die notwendige Kühlung der Luft.

In der Ablassleitung 12, welche während der Lagerung des Weins geschlossen gehalten werden muss, ist bei einem weiteren Ausführungsbeispiel ein Ablassventil vorgesehen, durch welches eventueller Ueberdruck in der Flasche vor deren Entnahme aus der Vorrichtung abgelassen werden kann.

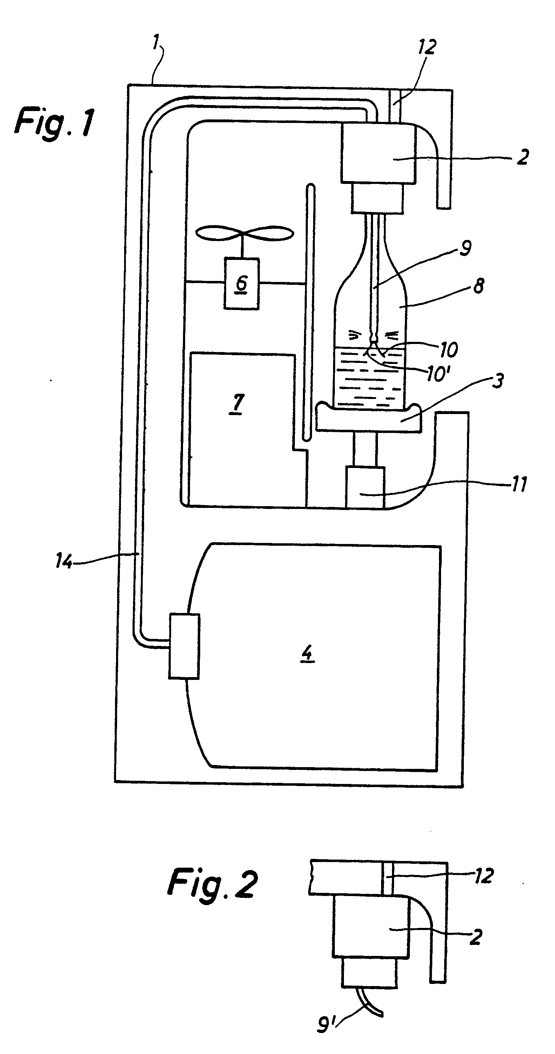

Fig. 2 zeigt einen Verschlusskopf 2 mit fest montierter Sonde 91.

Diese ist leicht nach aussen gebogen und elastisch deformierbar. Damit kann die Flasche leichter zu dem Verschlusskopf eingefahren werden; zudem wird das spülende Gas in die eine Hälfte der Flasche derart eingeblasen, dass die Atmosphärenluft auf der anderen Flaschenseite ausströmen kann.

## Ansprüche

1. Vorrichtung zum Aufbewahren von in einer entkorkten Flasche befindlichem Wein, wobei bei oder nach Wiederverschliessen der Flasche durch einen in Lagerstellung an den Flaschenhals anlegbaren Verschlusskopf (2) eine Sonde (9,9') in die Flasche eingebracht und durch diese ein konservierendes Gas oder Gasgemisch in die Flasche eingeblasen wird, gekennzeichnet durch eine von aussen frei zugängliche Flaschenhalterung (2,3) und eine Einrichtung zum dosierten Abgeben von konservierenden Gasen, wobei die Flaschenhalterung einen Verschlusskopf mit Mitteln (4,14) zum Einblasen eines Gases oder Gasgemisches und mit einem Luftauslass (12) sowie eine Abstellfläche (3) für den Flaschenboden derart aufweist, dass die Oeffnung der Flasche während der Lagerdauer dichtend am Verschlusskopf (2) anliegt, wobei die Sonde (9,9') im Verschlusskopf (2) derart ausgebildet ist, dass nach Abschluss des Einblases von Gas das Innere des Flaschenhalses zur Entnahme der Flasche aus der Flaschenhalterung im wesentlichen frei bleibt und wobei die Flaschenhalterung (2,3) im Luftstrom eines Kühlluftkreislaufes angeordnet ist, um den aufzubewahrenden Wein auf einer gewünschten Temperatur zu halten.

2. Vorrichtung nach Anspruch 1, dadurch gekennzeichnet, dass die Sonde (9) bis an die Weinoberfläche heranführbar und unmittelbar nach Einblasen des Gases oder Gasgemisches für nach der Lagerdauer zu erfolgendes leichtes Lösen des Verschlusskopfes (2) aus der Flasche zurückziehbar ist.

3. Vorrichtung nach Anspruch 1, dadurch gekennzeichnet, dass die Sonde mit Hilfe von die Weinoberfläche detektierenden Sensoren (10,10') gesteuert wird.

4. Vorrichtung nach Anspruch 1, dadurch gekennzeichnet, dass soviel Gas oder Gasgemisch einblasbar ist, dass sich in der Flasche ein Ueberdruck aufbaut.

5. Vorrichtung nach Anspruch 5, dadurch gekennzeichnet, dass der Ueberdruck während mindestens eines Abschnittes der Lagerdauer auf dem Niveau des Dampfdruckes eines in dem Wein gelösten Gases, z.B. $CO_2$, haltbar ist.

6. Vorrichtung nach Anspruch 1, dadurch gekennzeichnet, dass die Sonde (9') aus elastischem Kunststoff besteht und von der Vorrichtung nach aussen führend weggebogen verläuft.

7. Vorrichtung nach Anspruch 6, dadurch gekennzeichnet, dass mindestens eine Ausströmöffnung der Sonde (9') schräg nach unten weist.

8. Vorrichtung nach Anspruch 2, dadurch gekennzeichnet, dass die Sonde (9) Antriebs- und Steuermittel für das Vorschieben und Zurückziehen der Sonde aufweisen.

9. Vorrichtung nach Anspruch 8, dadurch gekennzeichnet, dass die Antriebs- und Steuermittel durch die Einspannung der Flasche aktivierbar sind.

10. Vorrichtung nach Anspruch 1, dadurch gekennzeichnet, dass der Kühlkreislauf ein Gebläse (6) sowie Kanäle (7) zum Aufrechterhalten des Kühlluftkreislaufes aufweist und dass ein Bereich zwischen Verschlusskopf (2) und Abstellfläche (3) im Kühlluftkreislauf angeordnet ist.

11. Vorrichtung nach Anspruch 1, dadurch gekennzeichnet, dass der Verschlusskopf und/oder die Abstellfläche für den Flaschenboden für die lösbare Einspannung der Flasche federnd gelagert sind.

## Claims

1. Device for storing wine in an uncorked bottle, which comprises a closure head (2) which can be urged against the neck of the bottle when the latter is being closed again or thereafter, said bottle being oriented in its storage position, and a probe (9, 9') which can be introduced through the closure head into the bottle in order to inject into the same a preservation gas or a mixture of such gases, characterized by a bottle holder (2, 3) which is freely accessible from outside, and by an apparatus for delivering controlled amounts of conservation gases, where the bottle holder comprises a closure head with means (4, 14) for injecting a gas or a gas mixture and an air exit (12), and a resting surface (3) for the bottom of the bottle, and is arranged so that during storage the mouth of the bottle is hermetically urged against the closure head (2), a probe (9, 9') being provided in the closure head (2) in such a way that after the injection of gas the space in the bottle-neck remains essentially free of obstructions in order that the bottle may be taken out of the holder, and where the holder (2,3) is placed in the air current of a cooling circuit in order to maintain the stored wine at a desired temperature.

2. Device according to claim 1, characterized in that the probe (9) can be advanced as far as the surface of the wine, and retracted after the injection of the gas or gas mixture, in order to allow an easy removal of the closure head (2) from the bottle at the end of the storage period.

3. Device according to claim 1, characterized in that the probe is commanded with the aid of sensors (10,10') which detect the surface of the wine.

4. Device according to claim 1, characterized in that enough gas or gas mixture can be injected to produce an excess pressure in the bottle.

5. Device according to claim 5, characterized in that the excess pressure may be maintained during at least part of the storage period at the same value as the vapour pressure of a gas, such as $CO_2$, dissolved in the wine.

6. Device according to claim 1, characterized in that the probe (9') consists of an elastic plastic material and that it protrudes outwards in a curved shape from the device.

7. Device according to claim 6, characterized in that at least one output aperture of the probe (9') is oriented obliquely downwards.

8. Device according to claim 2, characterized in that the probe (9) comprises urging and command means for advancing the probe, and for retracting it.

9. Device according to claim 8, characterized in that the urging and command means can be activated by inserting the bottle in the holder.

10. Device according to claim 1, characterized in that the cooling circuit comprises a ventilator (6) and channels (7) for maintaining a cooling air circuit, and that a region situated between the closure head (2) and the resting surface (3) is placed in the cooling air circuit.

11. Device according to claim 1, characterized in that the closure head and/or the resting surface for the bottom of the bottle is mounted elastically, for resiliently securing the bottle for storage.

**Revendications**

1. Dispositif pour conserver du vin dans une bouteille entamée, comportant une tête d'obturation (2) applicable, lors de la refermeture de la bouteille ou après celle-ci, contre le goulot de la bouteille placée dans sa position de stockage, une sonde (9,9') pouvant être introduite à travers cette tête à l'intérieur de la bouteille pour y injecter un gaz conservateur ou un mélange de tels gaz, caractérisé par un support de bouteille (2,3) librement accessible depuis l'extérieur et un dispositif pour délivrer de façon réglable des gaz conservateurs, le support comportant une tête d'obturation qui comprend des moyens (4,14) pour injecter un gaz ou un mélange de gaz et une sortie d'air (12), ainsi qu'une surface d'appui (3) pour le cul de la bouteille, ces éléments étant agencés de manière à ce que pendant la durée du stockage le goulot de la bouteille reste appliqué de manière étanche contre la tête d'obturation (2), la sonde (9,9') étant montée dans la tête d'obturation (2) de manière à ce qu'une fois l'injection de gaz terminée, l'intérieur du col de la bouteille reste essentiellement libre pour permettre d'extraire la bouteille du support (2,3), celui-ci étant placé dans le courant d'air d'un circuit de refroidissement pour maintenir le vin à conserver à une température désirée.

2. Dispositif selon la revendication 1, caractérisé en ce que la sonde (9) est agencée pour pouvoir être avancée jusqu'à la surface du vin et rétractée hors de la bouteille immédiatement après l'injection du gaz ou du mélange gazeux, afin d'assurer à la fin du stockage un dégagement facile de la tête d'obturation (2) hors de la bouteille.

3. Dispositif selon la revendication 1, caractérisé en ce que la sonde est commandée à l'aide de palpeurs (10, 10') agencés pour détecter la surface du vin.

4. Dispositif selon la revendication 1, caractérisé en ce qu'il permet d'injecter suffisamment de gaz ou de mélange gazeux pour engendrer une surpression dans la bouteille.

5. Dispositif selon la revendication 5, caractérisé en ce qu'il est agencé pour maintenir pendant au moins une partie de la durée du stockage une surpression égale à la pression de vapeur d'un gaz, par exemple du $CO_2$, dissous dans le vin.

6. Dispositif selon la revendication 1, caractérisé en ce que la sonde (9') est formée d'un matériau plastique élastique et est courbée vers l'extérieur du dispositif.

7. Dispositif selon la revendication 6, caractérisé en ce qu'au moins un orifice de sortie de la sonde (9') est orienté obliquement vers le bas.

8. Dispositif selon la revendication 2, caractérisé en ce que la sonde (9) possède des moyens d'entraînement et de commande pour le mouvement d'avance et de recul de la sonde.

9. Dispositif selon la revendication 8, caractérisé en ce que les moyens d'entraînement et de commande sont agencés pour être activés par la mise en place de la bouteille.

10. Dispositif selon la revendication 1, caractérisé en ce que le circuit de refroidissement comporte un ventilateur (6) ainsi que des canaux (7) pour l'établissement d'un circuit d'air de refroidissement, et qu'une région comprise entre la tête d'obturation (2) et la surface d'appui (3) est placée dans le circuit d'air de refroidissement.

11. Dispositif selon la revendication 1, caractérisé en ce que la tête d'obturation et/ou la surface d'appui pour le cul de la bouteille sont montées élastiquement pour fixer la bouteille de manière démontable.

## Fig.1

## Fig.2